# EUROPÄISCHE PATENTSCHRIFT

(11) **EP 0 657 048 B1**
(45) Veröffentlichungstag und Bekanntmachung des Hinweises auf die Patenterteilung: **25.08.1999**
(21) Anmeldenummer: 94918265.3
(22) Anmeldetag: 24.06.1994
(51) Int. Cl.: G06F 15/16

(54) **INTELLIGENTES KOMMUNIKATIONS-SYSTEM**
INTELLIGENT COMMUNICATION SYSTEM
SYSTEME DE COMMUNICATION INTELLIGENT

(30) Priorität: 30.06.1993 CH 197293
(43) Veröffentlichungstag der Anmeldung: 14.06.1995
(73) Patentinhaber: Gunzinger, Anton, CH-8008 Zürich (CH)
(72) Erfinder: Gunzinger, Anton, CH-8008 Zürich (CH)
(74) Vertreter: Frei, Alexandra Sarah
(86) Internationale Anmeldenummer: CH9400133
(87) Internationale Veröffentlichungsnummer: WO9501604

(56) Entgegenhaltungen:
- IBM TECHNICAL DISCLOSURE BULLETIN., Bd.35, Nr.3, August 1992, NEW YORK US Seiten 465 - 470 'Data structures and algorithms for collective communication over a dynamically determined set of processors in distributed memory parallel computers'
- IBM TECHNICAL DISCLOSURE BULLETIN., Bd.34, Nr.10B, März 1992, NEW YORK US Seiten 245 - 246 'Parallel data transfer operations'
- COMPUTER NETWORKS AND ISDN SYSTEMS, Bd.11, Nr.1, Januar 1986, AMSTERDAM NL Seiten 1 - 14 NORM HUTCHINSON 'The flooding sink-A new approach to local area networking'

## Beschreibung

Die Erfindung betrifft ein intelligentes Kommunikations-System sowie dessen Anwendung in einem Mehrprozessor-System bspw. für die Verwendung in der Elektronischen Datenverarbeitung.

Mehrprozessor-Systeme werden heutzutage in immer mehr grossen und auch kleinen Rechenanlagen und für immer vielfältigere Anwendungen eingesetzt. So ist beispielsweise ein Personal Computer faktisch mit mehreren spezialisierten Prozessoren für den Betrieb von Bildschirm, Tastatur, Massenspeicher etc. versehen, d.h. jeder Personal Computer ist schon heute ein Mehrprozessor-System.

Mehrprozessor-Systeme werden natürlich nicht nur in Personal Computern sondern auch in rechenintensiven Anwendungen, beispielsweise für wissenschaftliche Berechnungen wie Meterologie und Strömungslehre oder zur digitalen Bildverarbeitung eingesetzt. Solche Anwendungen lassen sich sehr gut durch parallel arbeitende Prozessoren ausführen, d.h. über mehrere oder noch besser über eine Vielzahl von Prozessoren die über ein Kommunikations-System miteinander verbunden sind. Man kann daher davon ausgehen, dass Mehrprozessor-Systeme in Zukunft eine wichtige Rolle spielen werden.

Klassische Supercomputer wie z.B. die CRAY Y-MP oder die NEC SX-3 weisen Rechenkapazitäten von mehreren GFLOPS (Billion Floating Point Operations per Second) aus. Ein einzelner moderner Prozessor, wie beispielsweise der Prozessor i860 von Intel, der PowerPC oder der DSP96002 von Motorola oder auch der Alpha von DEC verfügt hingegen "nur" über eine Rechenkapazität von bis zu über 100 MFLOPS (Million Floating Point Operations per Second). Die GFLOP-Schwelle wird erst durch eine synergiegebende Kopplung einer grösseren Anzahl einzelner Prozessoren zu einem Parallelrechner über ein Kommunikations-System erreicht. Diese parallel stattfindende elektronische Datenverarbeitung ist mit Schwierigkeiten der Kommunikation und der Programmierung behaftet. Die Art und Weise der Informationsvermittlung (Kommunikation) hat somit einen grossen Einfluss auf die Leistungsfähigkeit und den Aufbau von Parallelrechnern.

Die Schwierigkeiten der Kommunikation sind ein generelles Problem von Mehrprozessor-Systemen, sie sind ihnen inhärent. Um eine hohe Rechenleistung zu erreichen müssen möglichst viele Prozessoren zusammenarbeiten. Prinzipiell kann man vier verschiedene Architekturen unterscheiden.
a) Shared Memory, bei dieser Architektur greifen alle Prozessoren auf einen einzelnen gemeinsamen Speicher zu. Die Synchronisation der Prozessoren erfolgt mit sogenannten Lock- und Unlock-Instruktionen. Der Flaschenhals in einem solchen System ist der gemeinsame Speicher. Deshalb eignet sich diese Architektur nur für Mehrprozessor-Systeme mit einer relativ geringen Anzahl an Prozessoren.
b) Distributed Memory, bei dieser Architektur verfügt jeder Prozessor über einen individuellen Speicher, auf den auch von den anderen Prozessoren zugegriffen werden kann. Jeder Zugriff besteht dabei aus einem Request (Adresse) und dem eigentlichen Datenwert. Bei intensiver Kommunikation mit vielen Zugriffen von mehreren Prozessoren ist das entsprechende Kommunikations-System rasch überlastet.
c) Client/Server; hier verteilt ein Master (Client) die Aufgaben und Daten an mehrere Slaves (Server). Eine solche Architektur ist nur brauchbar, wenn die einzelnen Aufgaben und Daten keine oder nur sehr wenige Interaktion miteinander haben. Die trifft aber nur für wenige Anwendungen zu.
d) Message Passing, hier werden die in einem Prozessor produzierten Daten an alle an diesen spezifischen Daten interessierten Prozessoren durch eine Meldung abgeschickt. Die Anzahl verschickter Meldungen in diesem Kommunikations-System kann quadratisch anwachsen. Deshalb eignet sich auch diese Architektur nicht für Aufgaben mit intensiver Kommunikation und vielen Prozessoren.

Diese Kommunikations-Systeme kennzeichnen sich durch einen hohen Verwaltungsaufwand und geringem Datendurchsatz. Wie aus obigen Überlegungen hervorgeht, kommt dem Übertragungsprotokoll daher eine zentrale Bedeutung zu. Wie schnell die Kommunikation zum Flaschenhals werden kann, zeigt beispielsweise das symmetrischen Mehrprozessor-Systems des Pentiums von Intel, bei dem bis zu vier Prozessoren miteinander kommunizieren können. Das verwendete Multiprozessor-Interconnect (MPI) Kommunikations-System besitzt neun unterschiedliche Zyklen, mittels derer sich die einzelnen Prozessoren gemäss eines Übertragungsprotokolls über einen gemeinsam genutzten und lokale Speicher verständigen. Die maximale Übertragungsbandbreite beträgt 2.1 GBits/s bei 33,3 MHz Taktfrequenz und 64 Bit-Daten. Die einzelnen Pentiums werden mit 60 MHz für 64 Bit-Daten getaktet und weisen eine um einen Faktor 1.8 höhere maximale Ubertragungsbandbreite von 3.8 GBits/s auf. Bei Verwendung von vier Pentiums im Mehrprozessor-System wird das Kommunikations-System zum Nadelöhr, da unter Annahme einer linearen Geschwindigkeitszunahme, die maximale Übertragungsbandbreite des MPI-Systems nur 14% derjenigen der einzelnen Pentium beträgt.

Die Aufgabe der vorliegenden Erfindung ist es, ein optimales Kommunikations-Verfahren für Mehrprozessor-Systeme bezüglich Übertragungsgeschwindigkeit, Ausnutzung der Übertragungsbandbreite, Steuerung der Kommunikation und entsprechende Vorrichtungen aufzuzeigen.

Diese Aufgabe wird durch die in den Patentansprüchen definierte Erfindung gelöst.

Die der Erfindung zugrundeliegende Idee besteht in der Minimierung der Kommunikation auf die effiziente Übertragung von Informationen. Die zur Kommunikation nicht unbedingt notwendigen, aber für deren rasche Vermittlung überflüssigen Informationen, wie beispielsweise die Bestimmung der Reihenfolge sendender und empfangender Teilnehmer oder die Bestimmung, welcher Teilnehmer an wen sendet und welcher Teilnehmer von wem empfängt, oder auch die Festlegung des Zeitpunktes und der Paketgrösse einer Kommunikation etc., werden "abgetrennt" und sind demgemäss nicht Inhalt des Übertragungsprotokolls. Diese abgetrennten Informationen werden den Teilnehmern (die teilnehmenden Prozessoren) als Protokollweisungen in Form eines Fahrplans vor der "Sitzung" mitgeteilt, sie speichern sie sich und wissen somit im Voraus, wann, wie und an wen sie senden, wann, wie und von wem sie empfangen, etc., das heisst, es findet eine Teilung der Funktionen statt: das Übertragungsprotokoll stellt also nicht mehr einen Briefträger dar, der mit adressierten Couverts herumläuft und Briefkästen sucht, dieser kommt vielmehr mit offener Tasche nur noch bei den Teilnehmern vorbei, welche sich ihrerseits die sie interessierenden Informationen selbst besorgen. Die moderne elektronische Datenverarbeitung ermöglicht es auch, Informationen auf diese Art und Weise einmalig oder mehrmals zu kommunizieren. Das erfindungsgemässe Kommunikations-System (Briefträger, Fahrplan und Teilnehmer) wird deshalb intelligent und autonom aktuierend genannt, da die einzelnen Teilnehmer (Prozessoren) ihre Aufgaben und Funktionen im Voraus kennen. Das gemeinsame Kommunikationssystem ist als ganzes zu einem übergeordneten Corpus von Ablaufsvorgaben programmierbar. Die effiziente Übertragung kann so durch eine reine Hardware-Lösung (bspw. ein ASIC) realisiert werden, unter Verwendung einfacher, kostengünstig herzustellender und wenig anfälliger Komponenten.

Der Unterschied zwischen Message Passing und intelligenter Kommunikation und die Vorteile der letzteren kann beispielsweise wie folgt erläuert werden. Mehrere Prozessoren wollen kollegial, d.h. alle Prozessoren wollen zusammen ein Buch mit mehreren Tabellen erstellen, wobei aber ein jeder der Prozessoren nur einige der Tabellen berechnen kann. Nach erfolgter Berechnung sollen nun alle Tabellen unter den Prozessoren ausgetauscht werden, sodass ein jeder Prozessor die von seinen Kollegen erarbeiteten Informationen nutzen kann. Im Falle der einfachen Informationsübertragung (Message Passing) erstellt ein jeder der Prozessoren von seinen erarbeiteten Daten Kopien und sendet sie als Datenpaket an seine Kollegen. Diese Kopien sind mit Empfangsadressen für jeden Prozessor versehen. Das Netzwerk selber agiert als Postzustelldienst und vermittelt die adressierten Datenpakete. Ein jeder Prozessor erhält daraufhin eine grössere Anzahl von Datenpaketen, die er wieder in eine verarbeitbare Reihenfolge ordnet. Dieser Ordnungsaufwand steigt in erster Näherung linear mit der Anzahl der beteiligten Prozessoren an. D.h. der Verwaltungsaufwand kann selbst bei schneller Übertragung der Daten rasch grösser als der eigentliche Rechenaufwand zur Erstellung der Tabellen werden. In diesem Fall wird die Rechenleistung des Gesamtsystems durch Hinzufügen weiterer Prozessoren nicht mehr erhöht, ja im Gegenteil, sie kann sogar abnehmen. Hier setzt nun die Erfindung ein. Die Verwaltung der Kommunikation wird dem Netzwerk übergeben, deshalb auch der Name intelligentes Kommunikationssystem. Ein weiterer Vorteil besteht darin, dass die Verwaltung dafür sorgt, dass einem jeder Prozessor seine Datenpakete abgenommen werden und dass die Datenpakete für alle Prozessoren sinnvoll geordnet, kopiert und die jeweils richtigen Ausschnitte versandt werden. Ausschnitte sind Teile von Datenpaketen. Der Verwaltungsaufwand des Informationsaustauschs ist für die Prozessoren demzufolge minimiert.

Das intelligente Kommunikationssystem lässt sich aber nicht nur zum Ordnen und Versenden von zwischen einzelnen Prozessoren auszutauschenden Informationen verwenden, sondern es eignet sich auch zum eigentlichen Bearbeiten dieser Informationen. Das Kommunikationsnetzwerk weist hierfür ein oder mehrere Rechenwerke auf, die beispielsweise von einer Gruppe oder auch von allen Prozessoren benutzt werden, sodass Daten aus dem Kommunikationsnetzwerk in ein Rechenwerk eingespeist werden, ohne dass hierzu ein Aufruf, eine externe Weisung notwendig ist. Auf diese Weise lassen sich Berechnungen wie die Bestimmung des Minimums, des Maximums, der Summe, Z-Buffer, etc. mit frei einstellbaren Zählermodellen durchführen. Das Rechenwerk kann einem, mehreren oder auch allen Prozessoren mit gleichen oder verschiedenen Prioritäten unterstellt sein, die Kommunikation und die Steuerung dieser Berechnung erfolgt aber autonom.

Das intelligente Kommunikationssystem lässt sich schliesslich auch als schnelles Betriebssystem verwenden. In Analogie zum Rechenwerk weist das Kommunikationsnetzwerk hierfür ein oder mehrere Betriebswerke auf, die beispielsweise von einer Gruppe oder auch von allen Prozessoren benutzt werden, sodass Daten von einem oder von mehreren Prozessoren in ein Betriebswerk eingespeist werden, ohne dass hierzu ein Aufruf, eine externe Weisung notwendig ist und dass diese Daten an einen oder an mehrere Prozessoren auf die gleiche Weise, d.h. autonom verteilt werden.

Anhand der nachfolgend beschriebenen Figuren 1 bis 5 wird das erfindungsgemässe intelligente Kommunikations-System erläutert und es werden bevorzugte Ausführungsformen desselben im Detail beschrieben.
- Fig. 1: zeigt in einem Blockdiagramm die Ausgangslage für ein Kommunikations-Systems gemäss Erfindung.
- Fig. 2: zeigt im Zeitdiagramm den Kommunikations-Vorgang für ein Kommunikations-System in einer Ausführung gemäss Figur 1.
- Fig. 3: zeigt ein schematisches Modell parallel arbeitender Prozessoren im erfindungsgemässen Kommunikations-System.
- Fig. 4: zeigt ein schematisches Modell eines mit dem erfindungsgemässen Kommunikations-System implementierten mehrlagigen Perzeptrons.
- Fig. 5: zeigt in einem Blockdiagramm eine zweite Ausführungsform der Architektur des erfindungsgemässen Kommunikations-Systems mit Datenquellen und Datensenken.

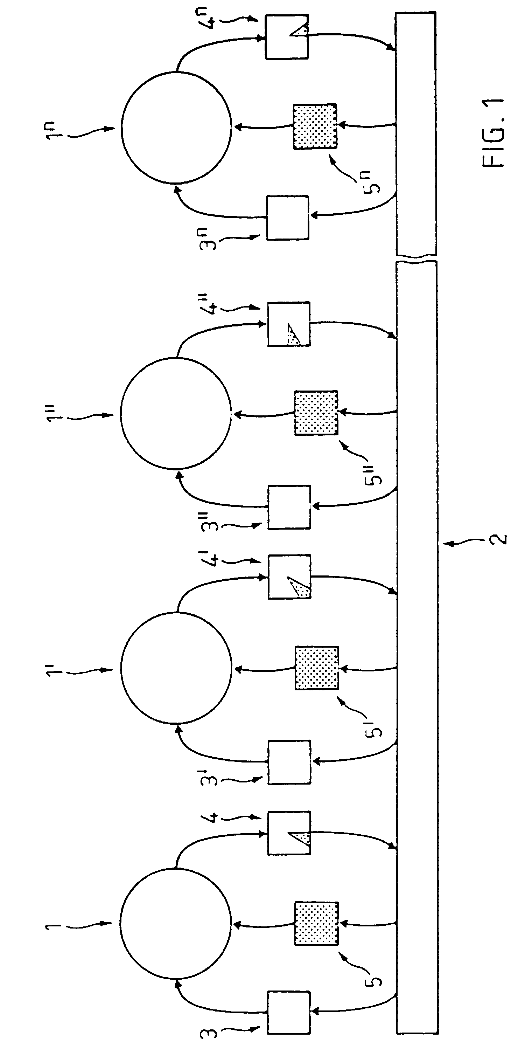

In **Figur 1** ist in einem Blockdiagramm eine erste Ausführungsform der Architektur des erfindungsgemässen Kommunikations-Systems zu sehen. Das Kommunikations-System ist intelligent und autonom aktuierend, d.h. zu Beginn einer Sitzung werden dem Kommunikations-System die nötigen Unterlagen für eine Kommunikation übermittelt. D.h. es versteht die von den einzelnen Teilnehmern gelieferten Informationen, kann sie zusammenstellen und an andere Teilnehmer weiterleiten. Dieses parallel kommunizierende Kommunikations-System für Mehrprozessor-Systeme ist somit programmierbar. Gemäss Figur 1 sind mehrere Prozessoren 1, 1', 1" bis 1ⁿ permanent und parallel an ein Kommunikations-System 2 angeschlossen, n ist hierbei eine ganze positive Zahl. Das Kommunikations-System 2 kann eine lineare, verästelte oder ringförmige Struktur aufweisen. Jeder dieser Prozessoren erhält seinen individuellen Algorithmus zur Abwicklung eines gemeinsamen Programms vor dessen Ausführung vom Kommunikations-System 2 in individuelle Speicher geschrieben. Ausserdem erhält ein jeder der Prozessoren einen ursprünglichen individuellen Datensatz und individuelle Protokollweisungen in individuelle Speicher überspielt. Während der Sitzung, die zu einem bestimmten Zeitpunkt beginnt und endet, werden, gemäss den Protokollweisungen vorher und in festgelegter Reihenfolge, über das Kommunikations-System lediglich Daten ein- und ausgelesen. Das gemeinsame Kommunikations-System ist als ganzes zu einem übergeordneten Corpus von Ablaufsvorgaben programmierbar und ist gemäss den Ablaufsvorgaben autonom aktuierend betreibbar. Die einzelnen Prozessoren erhalten vor der Kommunikation individuelle Algorithmen, Datensätze und Protokollweisungen in ihre Speicher übersandt, sie bearbeiten Datensätzen mit Algorithmen selbstständig und berechnen individuelle Ergebnisse und kommunizieren diese individuellen Ergebnisse als Daten entsprechend der Protokollweisungen autonom aktuierend an alle Prozessoren.

Die Übersendung von Instruktionen, Befehlen, Algorithmussequenzen, etc. an die einzelnen Prozessoren und die Kommunikation von individuellen Ergebnissen als Daten unter den einzelnen Prozessoren können also zeitlich voneinander getrennt übertragen werden. Das Kommunikations-System ist autonom. Die Steuerung der Kommunikation ist frei bestimmbar, sie kann zentral, d.h. von einem oder mehreren Prozessoren erfolgen, sie kann hierarchisch implementiert werden. Die vor der Sitzung übermittelten Algorithmen, Daten und Protokollweisungen werden beispielsweise von einem oder mehreren führenden Prozessoren an die anderen Prozessoren übermittelt, diese Hierarchie ist dann aber während der Sitzung aufgehoben. Jeder der Prozessoren 1, 1', 1" bis 1ⁿ ist gemäss seinem individuellen Satz an Instruktionen, Befehlen, Algorithmussequenzen, etc. derart autonom oder unabhängig, dass eine Arbitrierung, ein Schiedsgericht, ein Entscheiden, wann wer mit wem und wie kommuniziert, entfällt. Die Weisungsabhängigkeit der Prozessoren ist schon vorhanden, sie ist aber nicht mehr extern, während der Kommunikation präsent, sondern wurde intern, gemäss den Protokollweisungen vor der Kommunikation von den Prozessoren verinnerlicht. Dies unterscheidet das erfindungsgemässe Kommunikations-System 2 von solchen bekannter Art und Weise, da dort beispielsweise Kommunikationszeiten und die Grösse von Paketgrössen der Kommunikation extern festgelegt sind.

Jeder der Prozessoren 1, 1', 1" bis 1ⁿ erhält über das intelligente Kommunikations-System 2 Daten 3, 3', 3" bis 3ⁿ und erzeugt neue Daten 4, 4', 4" bis 4ⁿ. Die neu erzeugten Daten 4, 4', 4" bis 4ⁿ werden vom intelligenten Kommunikations-System 2 in einem weiteren, zeitlich darauffolgenden Kommunikations-Vorgang wiederum als Daten 5, 5', 5" bis 5ⁿ an die Prozessoren 1, 1', 1" bis 1ⁿ verteilt. Um dies zu verdeutlichen werden vom intelligenten Kommunikations-System gemäss Figur 1 zu einem bestimmten Zeitpunkt Daten 3, 3', 3" bis 3ⁿ, beispielsweise leere Datenkreise an die Prozessoren 1, 1', 1" bis 1ⁿ verteilt. Nun berechnen beispielsweise 12 Prozessoren in einem Vorgang individuelle Ergebnisse oder Datenpakete 4, 4', 4" bis 4ⁿ, beispielsweise jeder einen verschiedenen zu 1/12-gefüllten Datenkreis. Das intelligente Kommunikations-System stellt diese verschiedenen 1/12-gefüllten Datenkreise zu einem vollständig gefüllten Datenkreis zusammen und gibt ihn zu einem späteren bestimmten Zeitpunkt als Daten 5, 5', 5" bis 5ⁿ, beispielsweise als vollständig gefüllten Datenkreis an die Prozessoren 1, 1', 1" bis 1ⁿ weiter. Hiermit schliesst sich der Kreis, gemäss des im individuellen Speicher eines jeden der Prozessoren vorhandenen individuellen Algorithmus werden diese Daten 5, 5', 5" bis 5ⁿ von jeden Prozessor 1, 1', 1" bis 1ⁿ weiterverarbeitet, vom intelligenten Kommunikations-System wiederum zusammengestellt und dann zu einem bestimmten Zeitpunkt als neue Daten wieder an die einzelnen Prozessoren verteilt.

Das Kommunikations-System kann aber auch gleichzeitig Rechnen, d.h. es kann in ein oder mehrere gemeinsam genutzte Rechenwerke Daten einspeisen, ohne dass hierzu ein Aufruf, eine externe Weisung notwendig ist. Dieses Rechenwerk kann beispielsweise von allen Prozessoren benutzt werden. Auf diese Weise lassen sich Berechnungen wie die Bestimmung des Minimums, des Maximums, der Summe, Z-Buffer, etc. mit frei einstellbaren Zählermodellen durchführen. Gemäss Figur 1 berechnen beispielsweise 12 Prozessoren 1, 1', 1" bis 1ⁿ in einem Vorgang unterschiedliche, individuelle Ergebnisse oder Datenpakete 4, 4', 4" bis 4ⁿ. Beispielsweise berechnen sie gemeinsam den gleichen Datenkreis. Das intelligente Kommunikations-System überlagert diese Datenkreise, berechnet daraus beispielsweise Minima, des Maxima, Summen, etc. und gibt diese erhaltenen Daten 5, 5', 5" bis 5ⁿ zu einem späteren bestimmten Zeitpunkt beispielsweise als vollständig gefüllten Datenkreis an die Prozessoren 1, 1', 1" bis 1ⁿ weiter.

Das Kommunikations-System kann aber auch als Betriebssystem verwendet werden, d.h. dass ein oder mehrere Betriebswerke von einem oder mehreren Prozessoren zum Einspeisen von Daten benutzt werden. Ein oder mehrere Betriebswerke verteilen Daten dann an einen oder mehrere Prozessoren. Dieses Verteilen erfolgt an solche Prozessoren, die in der Lage sind, Daten aufzunehmen. Das Verteilen erfolgt ohne eine externe Weisung. Gemäss Figur 1 senden beispielsweise 12 Prozessoren 1, 1', 1" bis 1ⁿ in einem Vorgang Datenpakete 4, 4', 4" bis 4ⁿ auf ein Betriebswerk. Dieses verteilt die Datenpakete auf diejenigen Prozessoren, die eine Datenverarbeitung ausführen können. Diese Steuerung erfolgt ebenfalls autonom durch das Kommunikations-System. Natürlich ist es mit dem Kommunikations-System auch möglich, nicht umgestellte Daten als 5, 5', 5" bis 5ⁿ als beispielsweise teilweise gefüllte Datenkreis an die Prozessoren 1, 1', 1" bis 1ⁿ weiterzugeben. Hier stehen dem Fachmann bei Kenntnis der vorliegenden Erfindung vielfältige Möglichkeiten der Realisierung offen. Beispielsweise werden in einer speziellen Realisierung Daten von einem oder mehreren Prozessoren nur dann aufgenommen, wenn sie den durch das Betriebswerk vorgegebenen Kriterien genügen. Solche Kriterien können Datenfenster und Auschnitte in Datenpaketen sein.

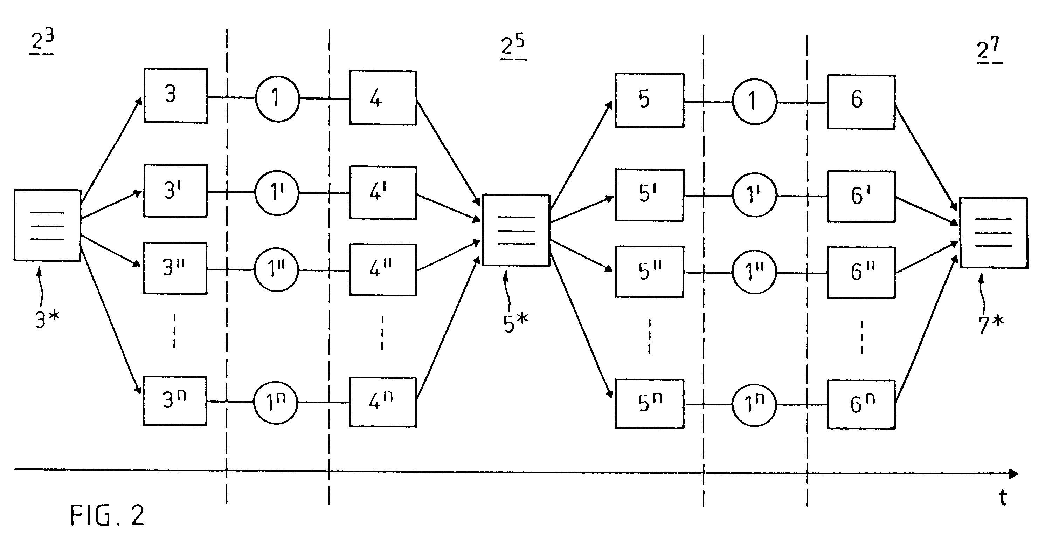

In **Figur 2** ist ein Zeitdiagramm des Kommunikations-Vorgangs für ein Kommunikations-System in einer Ausführung gemäss Figur 1 zu sehen. Das intelligente Kommunikations-System hat den einzelnen Prozessoren ihre individuellen Algorithmussequenzen und Protokollweisungen in die Speicher geschrieben. Der Datenaustausch beginnt am Anfang des Zeitpfeils t auf der linken Seite von Figur 2. Zu einem bestimmten Zeitpunkt werden den einzelnen Prozessoren 1, 1', 1" bis 1ⁿ vom Kommunikations-System 2 die zu verarbeitenden Daten 3, 3', 3" bis 3ⁿ aus einem Datenblock 3* zugesandt. Das Kommunikations-System 2 befindet sich hierbei im Zustand 2³. Diese Prozessoren arbeiten ihre individuellen Algorithmen ab und senden zu einem späteren Zeitpunkt ihre individuellen Ergebnisse oder Resultate 4, 4', 4" bis 4ⁿ an das Kommunikations-System 2. Das Kommunikations-System 2 befindet sich hierbei im Zustand 2⁴, es erhält Daten 4, 4', 4" bis 4ⁿ von den einzelnen Prozessoren 1, 1', 1" bis 1ⁿ. Diese Daten oder Datenpakete 4, 4', 4" bis 4ⁿ werden vom intelligenten Kommunikations-System 2 zu einem virtuellen Datenblock 5* zusammengestellt und dieser ( oder Teile davon) können daraufhin wieder an die Prozessoren verteilt werden. Diese Vorgänge der Datenübermittlung können sich wiederholen. Das intelligente Kommunikations-System 2 kann die zu einem virtuellen Datenblock 5* zusammengestellten zu einem bestimmten Zeitpunkt nochmals als zu verarbeitende Daten 5, 5', 5" bis 5ⁿ an die Prozessoren 1, 1', 1" bis 1ⁿ verteilen. Hierbei befindet sich das Kommunikations-System im Zustand 2⁵, es sendet Daten 5, 5', 5" bis 5ⁿ an die einzelnen Prozessoren 1, 1', 1" bis 1ⁿ. Die individuellen Ergebnisse oder Resultate 6, 6', 6" bis 6ⁿ der einzelnen Prozessoren werden dann wieder vom Kommunikations-System 2 eingesammelt und wiederum zu einem virtuellen Datenblock 7* zusammengestellt. Das intelligente Kommunikations-System 2 befindet sich dann im Zustand 2⁷.

Die Datenpakete, die erzeugt werden, können konstante oder unterschiedliche Grösse haben. So kann beispielsweise ein Datensatz der ein Bild darstellt, zeilenweise oder blockweise (auch mit unterschiedlicher Blockgrösse) aufgeteilt werden. In einer vorteilhaften Ausführungsform kann man sich konstant oder flexibel gestaltete Fenster vorstellen, in welchen ein einzelner Prozessor Daten aussendet bzw. empfängt. Die Längen der Fenster können für jeden der Prozessoren frei eingestellt werden.

Falls im intelligenten Kommunikation-System gerechnet wird, so können sich die Datenfelder beim Senden zeitlich auch überlappen. Für jeden Datenpunkt wird im Rechenwerk dann eine entsprechende Funktion ausgeführt, beispielsweise wird bei einer Minimum-Funktion dann das Minimum der entsprechenden Funktion berechnet, usw. Dem Fachmann stehen bei Kenntnis der Erfindung hierbei vielfältige Arten der Realisierung solcher Übertragungen offen.

Es gibt verschiedene Möglichkeiten die Kommunikation und die Verarbeitung miteinander zu synchronisieren:
a) die einzelnen Prozessoren erzeugen individuelle Daten 4, 4', 4" bis 4ⁿ, diese werden als Block an das Kommunikations-System 2 übergeben, und die Prozessoren warten bis alle zu verarbeitenden Daten 5, 5', 5" bis 5ⁿ bei den Prozessoren 1, 1', 1" bis 1ⁿ eingetroffen sind.
b) die einzelnen Prozessoren erzeugen individuelle Daten 4, 4', 4" bis 4ⁿ, diese werden jedoch einzeln an das Kommunikations-System 2 übergeben, und die Prozessoren warten bis alle zu verarbeitenden Daten 5, 5', 5" bis 5ⁿ bei den Prozessoren 1, 1', 1" bis 1ⁿ eingetroffen sind.
c) die einzelnen Prozessoren erzeugen individuelle Daten 4, 4', 4" bis 4ⁿ, diese werden a Block an das Kommunikations-System 2 übergeben. Sobald einzelne zu verarbeitenden Daten 5, 5', 5" bis 5ⁿ bei Prozessoren 1, 1', 1" bis 1ⁿ eingetroffen sind, beginnen diese mit der Weiterverarbeitung.
d) die einzelnen Prozessoren erzeugen individuelle Daten 4, 4', 4" bis 4ⁿ, diese werden einzeln an das Kommunikations-System 2 übergeben. Sobald einzelne zu verarbeitenden Daten 5, 5', 5" bis 5ⁿ bei Prozessoren 1, 1', 1" bis 1ⁿ eingetroffen sind, beginnen diese mit der Weiterverarbeitung.

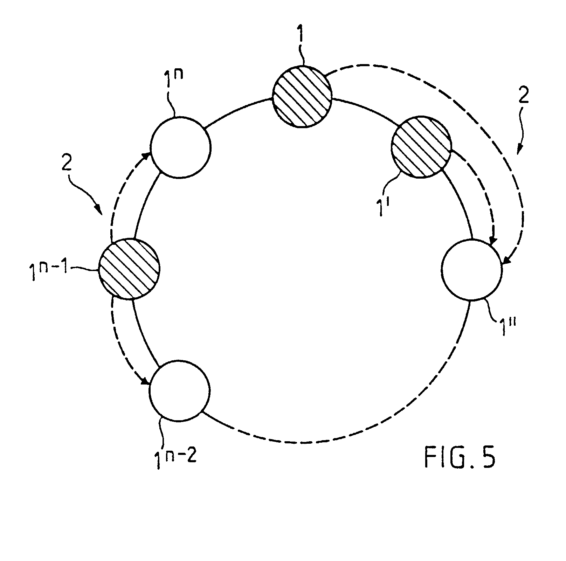

Die Paketgrössen der Übertragung des Kommunikations-Systems sind ebenfalls varierbar. D.h. einzelne Prozessoren können somit mit, vor der Kommunikation individuell festgelegten Paketgrössen kommunizieren. Die technisch maximale Übertragungsbandbreite kann also, je nach Notwendigkeit, vollständig ausgenutzt oder in mehrere Übertragungskanäle unterteilt werden, sodass beispielsweise das gleichzeitige Senden und Empfangen stattfindet (siehe Beschreibung gemäss Figur 5). Genauso wie auch der Zeitpunkt der Kommunikation eines jeden Prozessors während der Kommunikation, entsprechend der vorgegebenen Protokollweisungen verändert werden kann, so kann auch die Paketgrösse der Übertragung eines jeden Prozessors während der Kommunikation verändert werden.

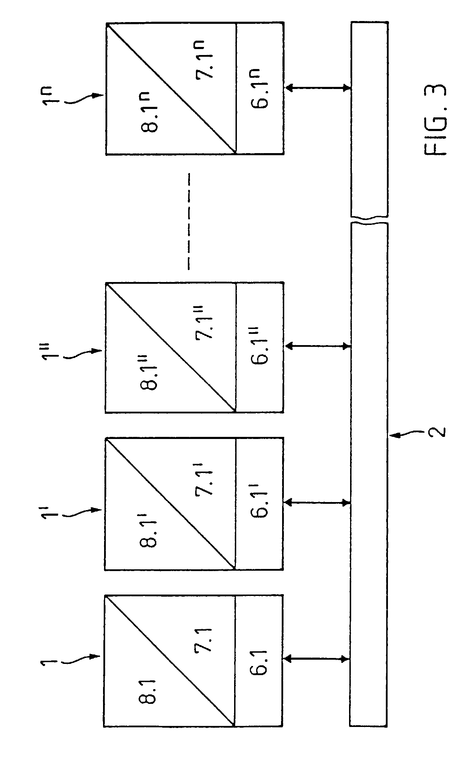

In **Figur 3** ist ein schematisches Modell parallel arbeitender Prozessoren im erfindungsgemässen Kommunikations-System zu sehen. In einer vorteilhaften Ausführungsform sind die einzelnen Prozessoren 1, 1', 1" bis 1ⁿ schnelle Prozessoren. Jeder dieser Prozessoren weist einen Kommunikationskontroller 6.1, 6.1', 6.1" bis 6.1ⁿ sowie zwei Speicher 7.1, 7.1', 7.1" bis 7,1ⁿ und 8.1, 8.1', 8.1" bis 8.1ⁿ auf. Die Kommunikationskontroller 6.1, 6.1', 6.1" bis 6.1ⁿ organisieren den Zugriff auf die Speicher 7.1, 7.1', 7.1" bis 7,1ⁿ und 8.1, 8.1', 8.1" bis 8,1ⁿ zwischen den Prozessoren 1, 1', 1" bis 1ⁿ und dem Kommunikations-System 2. Die Kommunikationskontroller können einzeln aufgebaut sein, oder mehrere Kommunikationskontroller können auf einem Modul, beispielsweise einem Chip zusammengefasst werden. Die Speicher 7.1, 7.1', 7.1" bis 7.1ⁿ sind Datenspeicher, beispielsweise Video-DRAMs, die Speicher 8.1, 8.1', 8.1" bis 8,1ⁿ sind Befehlsspeicher, beispielsweise SRAMs. Vorteilhafterweise haben die von den Datenspeichern 7.1, 7.1', 7.1" bis 7.1ⁿ und Befehlsspeicher 8.1, 8.1', 8.1" bis 8.1ⁿ zwei Eingänge, einen für den Prozessor, einen als Schnittstelle zum Kommunikations-System. Derart ausgerüstet kann beispielsweise ein Prozessor 1 Daten bearbeiten und auf seinen Datenspeicher 7.1 zugreifen, ohne durch die Übermittlung neuer, zu verarbeitender Daten über die Schnittstelle vom Kommunikations-System 2 gestört zu werden. Das Öffnen und Schliessen der beiden Eingänge des Datenspeichers 7.1 wird dann über den Kommunikationskontroller 6.1 gesteuert.

Falls im Kommunikations-System 2 auf einem oder mehreren Rechenwerken gerechnet wird, so befinden sich diese Rechenelemente (Vergleicher, Summierer, arithmetrische logische Einheit, usw.) in den Kommunikationskontrollern 6.1, 6.1', 6.1" bis 6.1ⁿ. Das Rechenwerk in den Kommunikationskontrollern kann dann auch zum Steuern einer Aufgabenannahme verwendet werden. Beispielsweise kann ein Kommunikationskontroller nur dann eine Aufgabe annehmen, wenn ein Datenwert innerhalb eines gewissen erwarteten und vom Prozessor vorgegebenen Wertes liegt.

Falls im Kommunikations-System 2 ein schnelles Betriebssystem betrieben wird, signalisieren die Prozessoren 1, 1', 1" bis 1ⁿ den Kommunikationskontrollern 6.1, 6.1', 6.1" bis 6.1ⁿ, den Zeitpunkt, ab dem sie zur Datenaufnahme bereit sind. Die Kommunikationskontroller 6.1, 6.1', 6.1" bis 6.1ⁿ holen sich dann vom Kommunikations-System 2 eine Aufgabe.

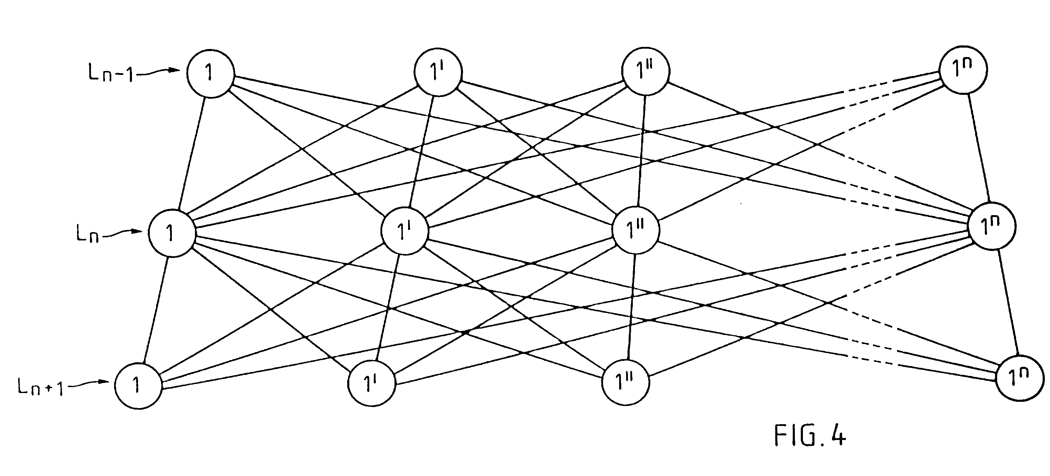

In **Figur 4** ist ein schematisches Modell eines mit dem erfindungsgemässen Kommunikations-System implementierten mehrlagigen Perzeptrons (Neuronales Netz) zu sehen. Das mehrlagige Perzeptron ist eine beispielhafte parallelisierbare Anwendung. Es ist ein universelles Lernmodell, welches die Entwicklung von Werten in einer Vielzahl von Lagen Lₙ₋₁, Lₙ, Lₙ₊₁ (n ist eine positive ganze Zahl) gemäss einem Algorithmus darstellt. Ausgehend von einem Anfangswert, der in einer Lage Lₙ vorgegeben wird, erfolgt in Vorwärtsrichtung (n+1) durch die Lagen die Berechnung eines Endwerts und in Rückwärtsrichtung (n-1) durch die Lagen die Berechnung eines Ursprungswerts. Um dies zu tun, berechnen die einzelnen Prozessoren 1, 1', 1" bis 1ⁿ in jeder Lage parallel Ergebnissätze und kommunizieren sie untereinander, bevor Werte einer nächsten Lage berechnet werden. Diese Kommunikation von Ergebnissätzen wird durch die Linien, welche die einzelnen Prozessoren 1, 1', 1" bis 1ⁿ benachbarter Lagen verbinden, dargestellt. Entsprechend der grossen Anzahl Prozessoren und der Komplexität der Berechnungen, können die Ergebnissätze gross sein, d.h. deren Kommunikation kann rasch zum geschwindigkeitsbestimmenden Schritt bei der Ausführung des Algorithmus werden.

Der Vorteil des erfindungsgemässen Kommunikations-Systems 2 besteht darin, dass es programmierbar ist, dass den einzelnen Prozessoren 1, 1', 1" bis 1ⁿ ihre individuelle Algorithmen oder Rechensoftware, bestimmte, die zur Ausführung derselben notwendigen Datensätze, sowie die Protokollweisungen (beispielsweise ihre individuellen Kommunikationszeiten und Übertragungsbandbreiten), vor Beginn der Ausführung des Perzeptron-Algorithmus in ihre Datenspeicher 7.1, 7.1', 7.1" bis 7.1ⁿ und Befehlsspeichern 8.1, 8.1', 8.1" bis 8.1ⁿ übermittelt bekommen. Somit können sie während der Ausführung des Algorithmus gemäss ihrer individuellen Rechensoftware selbstständig arbeiten. Aufgrund der Protokollweisungen wissen sie von sich aus, wann sie Ergebnisse senden und empfangen sollen, und sie wissen auch ihre eigenen Datensätze mit diesen Ergebnissen selbstständig zu aktualisieren.

Die Intelligenz dieses Kommunikations-Systems liegt also darin, dass während der Ausführung des Algorithmus nur ein Minimum an Daten kommuniziert werden und dass es weitgehend autonom funktioniert. Die vorab übermittelten Protokollweisungen führen zu einer hierarchielosen Kommunikation. Die Autonomie darin besteht, dass ein Fahrplan (Schedule) mit Kommunikationspaketgrössen zwischen den einzelnen Prozessoren entsprechend der Protokollweisungen vor der Kommunikation festlegt sind. Minimalisiert bedeutet, dass einzelne Datenwerte, die an mehrere andere Prozessoren verschickt werden müssen, nur einmal das Kommunikations-System belasten. Alle an diesem spezifischen Datenwert interessierten Prozessoren machen sich eine Kopie davon. Entsprechend den Protokollweisungen wissen die Kommunikationskontroller somit, beispielsweise durch Zählen der kommunizierten Datenwerte, wann sie an der Kommunikation teilnehmen sollen, sie müssen dafür nicht, wie üblicherweise der Fall, von einer höheren Instanz aufgefordert werden, sie müssen die Kommunikationslinie auch nicht unnötig lange offen halten und warten. Es muss daher keine zeitaufwendige Arbitrierung durchgeführt werden. Gemäss Figur 3 wird dieses Öffnen und Schliessen der Eingänge der Datenspeicher 7.1, 7.1', 7.1" bis 7.1ⁿ über die Kommunikationskontroller 6.1, 6.1', 6.1" bis 6.1ⁿ der einzelnen Prozessoren 1, 1', 1" bis 1ⁿ gesteuert. Die Datenlängen und Kommunikationszeiten werden also minimalisiert, sie sind kurz und bekannt.

Das Kommunikations-System ist programmierbar und wird durch die Übersendung von Software, Daten und Protokollweisungen an die teilnehmenden Prozessoren vor der eigentlichen Kommunikation nicht nur schnell, sondern auch flexibel. Die verwendete Hardware, nämlich Prozessoren mit Datenspeichern und Kommunikationskontrollern bedingt eine schnelle Kommunikation, da direkt am Kommunikations-System eigentlich nur die Zugänge zu den Datenspeichern angeschlossen sind, die sich rasch getaktet Öffnen und Schliessen lassen. Das was je nach Anwendung variert, nämlich die Software und Daten, werden vor der Kommunikation an die Prozessoren übermittelt, womit eine generelle Anwendungsbreite gewährleistet wird.

In **Figur 5** ist im Blockdiagramm eine zweite Ausführungsform der Architektur des erfindungsgemässen Kommunikations-Systems mit Datenquellen und Datensenken zu sehen. Die Kommunikation findet hier gemäss einer Ringstruktur statt, das Kommunikations-System 2 verbindet die einzelnen Prozessoren 1, 1', 1" bis 1ⁿ in einem geschlossenem Ring. Im Unterschied zu linearen Matrix- oder Baumstrukturen ermöglichen Ringstrukturen den gleichzeitigen Zugriff auf Daten. Sie können auch mit grösseren Datenraten arbeiten als beispielsweise klassische Bus-basierte oder lineare Kommunikations-Systeme, da hier ein einzelner Sender Informationen an einen einzelnen bekannten Empfänger weiterreicht, was schaltungstechnisch einfacher zu realisieren ist. Sie sind somit schneller und können über grössere Distanzen betrieben werden. Prinzipiell sind aber auch lineare, Matrix- oder Baumstrukturen möglich. Für kleine Systeme auf eng begrenztem Raum kann eine lineare Struktur einfacher zu realisieren sein. Die einzelnen Kommunikationskontroller sind dann in einem Bus mit linearer Matrix verbunden. Dem Fachmann stehen bei Kenntnis dieser Erfindung zahlreiche Ausführungsformen frei.

In der Ausführungsform gemäss Figur 5 sind die einzelnen Prozessoren 1, 1', 1" bis 1ⁿ mit Datenspeichern 7.1, 7.1', 7.1" bis 7.1ⁿ und Befehlsspeichern 8.1, 8.1', 8.1" bis 8.1ⁿ ausgestattet und nehmen über Kommunikationskontroller 6.1, 6.1', 6.1" bis 6.1ⁿ an der Kommunikation teil (siehe Beschreibung gemäss den Figuren 1 bis 3). Vor der eigentlichen Kommunikation, dem Austausch von berechneten Ergebnissen als Daten zwischen allen Prozessoren 1, 1', 1" bis 1ⁿ, werden ihnen die individuelle Rechensoftware, die für Berechnung notwendigen Datensätze sowie die Protokollweisungen wie die Kommunikationspaktgrössen übermittelt. Die Intelligenz des Kommunikations-System besteht darin, die Kommunikation zwischen den einzelnen Prozessoren zu minimieren, optimal und schnellstmöglich zu bewerkstelligen.

Während der Abarbeitung der Daten gemäss den individuellen Algorithmen entstehen Ergebnisse als zu kommunizierende Daten, deren Verteilung über die einzelnen Prozessoren kann man auch als Datenquellen und Datensenken bezeichnen. Als Datenquellen werden die "vollen" Speicher der dunklen, schraffierte Prozessoren 1, 1', 1" bis 1ⁿ bezeichnet, als Datensenken werden die "leeren" Speicher der hellen, nicht schraffierten Prozessoren 1, 1', 1" bis 1ⁿ bezeichnet. Beispielsweise findet zu dem in Figur 5 gezeigten Zeitpunkt eine Kommunikation über das Kommunikations-System 2 zwischen den Prozessoren 1, 1' und 1" statt, wobei die Prozessoren 1 und 1' gleichzeitig aber über verschieden grosse Paketgrössen Daten an den Prozessor 1" übermitteln. Und der Prozessor 1ⁿ⁻¹ sendet gleichzeitig Daten an die Prozessoren 1ⁿ⁻² und 1ⁿ. Anders als beispielsweise im demultiplexten Token-Ring, wo die Sendeberechtigung der an der Kommunikation teilnehmenden Prozessoren reihum vergeben wird, ist im erfindungsgemässen Kommunikations-System das Multiplexen, ein gleichzeitiger Zugriff auf Daten aus mehreren Prozessoren möglich. Dies beruht auf der hohen Flexibilität der individuellen Protokollweisungen. Dadurch, dass sich diese Protokollweisungen nur auf die Kommunikation von Daten beschränkt, nicht aber beispielsweise die kommunizierenden Prozessoren hierarchisch, extern selber aufrufen muss, kann die Übertragungsbandbreite entsprechend der Grösse der zu kommunizierenden Daten in mehrere und schmälere und unabhängige Übertragungskanäle unterteilt werden. Die Richtung der Kommunikation ist nicht vorgegeben, so kommuniziert der Prozessor 1ⁿ⁻¹ gegenläufig mit den Prozessoren 1ⁿ⁻² und 1ⁿ. Natürlich sind während einer Kommunikation auch Reihenfolge- und Richtungsänderungen möglich.

In einer weiteren Ausführungsform kann man sich ein erfindungsgemässes Kommunikations-System in einer Anordnung nach der Beschreibung gemäss den Figuren 1 bis 5 als Hyper-Prozessor denken. Dieser kann wiederum mit intelligenten Kommunikationskontrollern zur Kommunikation mit anderen Kommunikations-Systemen versehen werden. Mehrere solcher Hyper-Prozessoren können also analog zur obigen Beschreibung miteinander gekoppelt werden. Dadurch entsteht ein Hyper-Hyper-Prozessor. Dieses Spiel lässt sich beliebig oft wiederholen. Damit können sehr grosse und entsprechend leistungsfähige Supercomputer aufgebaut werden. Solche Hyper-Prozessoren verfügen über die gleiche Vielfalt möglicher Architekturen, wie sie oben beschrieben sind. So können in einer vorteilhaften Ausführungsform mehrere ringförmige Kommunikations-Systeme derart gekoppelt werden, dass sie über intelligente Kommunikationskontroller miteinander kommunizieren können, wobei ein Hyper-Prozessor die Führung übernimmt, ganz im Sinne der Server/Client-Architektur. Natürlich können in anderen Ausführungsformen andere und auch unterschiedlich strukturierte Architekturen, beispielsweise lineare, Matrix- oder Baumstrukturen von Hyper-Prozessoren miteinander gekoppelt werden. Auch hier stehen dem Fachmann bei Kenntnis der Erfindung vielfältige Variationsmöglichkeiten der Gestaltung frei.

## Patentansprüche

1. Parallel arbeitendes Mehrprozessor-System der elektronischen Datenverarbeitung, dessen Prozessoren über individuelle Datenspeicher, Befehlsspeicher und Schnittstellen zu einem gemeinsamen Kommunikations-System verfügen,
dadurch gekennzeichnet, daß
das gemeinsame Kommunikations-System als ganzes zu einem übergeordneten Corpus mit Ablaufsvorgaben programmiert ist und den Ablaufsvorgaben entsprechend autonom aktuierend betrieben wird,
wobei den aufgrund der programmierten Ablaufsvorgaben des Kommunikations-systems adressierten Prozessoren vor einer Kommunikationssitzung individuelle Algorithmen, Datensätze und Protokollweisungen in ihre Speicher übersandt werden,
wobei die Protokollweisungen Aufgaben und Funktionen, sowie Kommunikationskriterien betreffend den zeitlichen Bedingungen des Datenaustausches der einzelnen Prozessoren mit dem Kommunikations-System, bestimmen, und während einer Kommunikationssitzung die einzelnen Prozessoren Datensätze aufgrund ihrer individuellen Algorithmen selbständig bearbeiten und individuelle Ergebnisse als Daten entsprechend den Protokollweisungen autonom an alle Prozessoren liefern.

2. System gemäss Anspruch 1, dadurch gekennzeichnet, dass die Autonomie darin besteht, dass die einzelnen Prozessoren entsprechend den Protokollweisungen selbstständig Daten senden und empfangen.

3. System gemäss einem der Ansprüche 1 oder 2, dadurch gekennzeichnet, dass die Autonomie darin besteht, dass die einzelnen Prozessoren entsprechend den Protokollweisungen ihre individuellen Datensätze mit den kommunizierten Daten selbstständig aktualisieren und daraufhin ihre individuellen Algorithmen mit diesen selbständig aktualisierten individuellen Datensätzen weiterbearbeiten.

4. System gemäss Anspruch 3, dadurch gekennzeichnet, dass die einzelnen Prozessoren ihre individuellen Datensätze durch Zählen der kommunizierten Daten autonom aktuieren.

5. System gemäss einem der Ansprüche 1 bis 4, dadurch gekennzeichnet, dass die Autonomie darin besteht, dass ein Fahrplan mit Kommunikationspaketgrössen zwischen den einzelnen Prozessoren entsprechend den Protokollweisungen vor der Kommunikation festgelegt wird.

6. System gemäss Anspruch 5, dadurch gekennzeichnet, dass gleich grosse Kommunikationspaketgrössen zwischen den einzelnen Prozessoren verwendet werden.

7. System gemäss Anspruch 5, dadurch gekennzeichnet, dass verschieden grosse Kommunikationspaketgrössen zwischen den einzelnen Prozessoren verwendet werden.

8. System gemäss einem der Ansprüche 1 bis 5, dadurch gekennzeichnet, dass die Autonomie darin besteht, dass Bandbreiten der Übertragung zwischen den einzelnen Prozessoren entsprechend den Protokollweisungen vor der Kommunikation festgelegt werden.

9. System gemäss Anspruch 8, dadurch gekennzeichnet, dass gemultiplext wird, dass auf Daten aus mehreren Prozessoren über mehrere Übertragungsbandbreiten zugegriffen wird.

10. System gemäss Anspruch 9, dadurch gekennzeichnet, dass die Übertragungsbandbreiten entsprechend der Grösse der zu kommunizierenden Daten in mehrere und schmälere und unabhängige Übertragungskanäle unterteilt werden.

11. System gemäss einem der Ansprüche 1 bis 10, dadurch gekennzeichnet, dass die einzelnen Prozessoren nur durch Senden und Empfangen von Daten über Schnittstellen zum Kommunikations-System miteinander kommunizieren.

12. System gemäss Anspruch 11, dadurch gekennzeichnet, dass geänderte Daten aus individuellen Datensätzen als Daten kommuniziert werden.

13. Kommunikations-System zum Einsatz im Mehrprozessor-System gemäss den Ansprüchen 1 bis 12, dadurch gekennzeichnet, dass die einzelnen Prozessoren über Kommunikationskontroller verfügen, die das Öffnen und Schliessen der Datenspeicher über Schnittstellen zum Kommunikations-System steuern.

14. Kommunikations-System gemäss Anspruch 13, dadurch gekennzeichnet, dass die Kommunikationskontroller unbhängig von den einzelnen Prozessoren arbeiten und dass die einzelnen Prozessoren unabhängig vom Öffnen und Schliessen der Datenspeicher, von der Kommunikation über die Schnittstellen arbeiten.

15. Kommunikations-System gemäss Anspruch 13, dadurch gekennzeichnet, dass mehrere Kommunikationskontroller auf einem Modul zusammenfassbar sind.

16. Kommunikations-System gemäss Anspruch 13, dadurch gekennzeichnet, dass die Prozessoren mit ihren Kommunikationskontrollern in einem geschlossenem Ring angeordnet sind.

17. Kommunikations-System gemäss Anspruch 16, dadurch gekennzeichnet, dass die Kommunikationskontroller über einen Bus miteinander verbunden sind.

18. Kommunikations-System gemäss Anspruch 13, dadurch gekennzeichnet, dass ein oder mehrere Kommunikationskontroller als ein oder mehrere gemeinsam nutzbare Rechenwerke arbeiten, wobei ein oder mehrere Prozessoren Daten autonom in diese Kommunikationskontroller einspeisen und in diesen Kommunikationskontrollern Berechnungen erfolgen.

19. Kommunikations-System gemäss Anspruch 13, dadurch gekennzeichnet, dass ein oder mehrere Kommunikationskontroller als Betriebswerk arbeiten, wobei ein oder mehrere Prozessoren Daten autonom in diese Kommunikationskontroller eingespeisen und diese Kommunikationskontroller Daten an einen oder mehrere Prozessoren übersenden.

20. Hyper-Prozessor aufgebaut aus einem Kommunikations-System gemäss einem der Ansprüche 13 bis 19, dadurch gekennzeichnet, dass der Hyper-Prozessor mit weiteren Kommunikationskontrollern versehen ist, welche die Kommunikation mit anderen Hyper-Prozessoren erlauben.

21. Hyper-Prozessor gemäss Anspruch 20, dadurch gekennzeichnet, dass mehrere Hyper-Prozessoren miteinander gekoppelt sind.

22. Hyper-Prozessor gemäss Anspruch 21, dadurch gekennzeichnet, dass mehrere Hyper-Prozessoren hierarchisch miteinander gekoppelt sind.

## Claims

1. Parallel-operating electronic data processing multiprocessor system whose processors have individual data memories, instruction memories and interfaces to a common communications system characterized in that
the common communications system as a whole is programmed as an overriding body and is operated in an autonomous manner according to execution sequences
wherein, before a communications session, the memories of the processors being addressed according to the programmed execution sequences of the communication system are supplied with individual algorithms, data sets and protocol instructions,
wherein the protocol instructions define tasks and functions as well as communications criteria regarding the temporal conditions of the data exchange of the individual processors with the communications system
and wherein, during a communications session, the individual processors process data sets independently according to their individual algorithms and supply results as data independently according to protocol instructions to all processors.

2. System according to claim 1, characterized in that autonomy exists in that the individual processors transmit and receive data independently in accordance with the protocol instructions.

3. System according to one of the claims 1 or 2, characterized in that the autonomy consists of the individual processors independently updating their individual data sets with the communicated data in accordance with the protocol instructions and then further process their individual algorithms with said independent, updated, individual data sets.

4. System according to claim 3, characterized in that the individual processors autonomously update their individual data sets by counting the communicated data.

5. System according to one of the claims 1 to 4, characterized in that the autonomy consists of a schedule with communications packet sizes being fixed between the individual processors corresponding to the protocol instructions prior to the communication.

6. System according to claim 5, characterized in that identically large communications packet sizes are used between the individual processors.

7. System according to claim 5, characterized in that differently large communications packet sizes are used between the individual processors.

8. System according to one of the claims 1 to 5, characterized in that the autonomy consists of the bandwidth of the transmissions between the individual processors being fixed in accordance with the protocol instructions prior to the communication.

9. System according to claim 8, characterized in that multiplexing takes place with accessing to data from several processors via several transmission bandwidths.

10. System according to claim 9, characterized in that the transmission widths are subdivided into several, narrower and independent transmission channels corresponding to the size of the data to be communicated.

11. System according to one of the claims I to 10, characterized in that the individual processors only communicate with one another by transmitting and receiving data via interfaces with respect to the communication system.

12. System according to claim 11, characterized in that modified data from individual data sets are communicated as data.

13. Communications system foruse in the multiprocessor system according to claims 1 to 12, characterized in that the individual processors have communications controllers, which control the opening and closing of the data memories via interfaces to the communications system.

14. Communications system according to claim 13, characterized in that the communications controllers operate independently of the individual processors and that the individual processors operate independently of the opening and closing of the data memories and the communication via the interfaces.

15. Communications system according to claim 13, characterized in that several communications controllers are combined together on a module.

16. Communications system according to claim 13, characterized in that the processors with their communications controllers are located in a closed ring.

17. Communications system according to claim 16, characterized in that the communications controllers are interconnected by means of a bus.

18. Communications system according to claim 13, characterized in that one or more communications controllers operate as one or more jointly usable arithmetic Units, one or more processors feeding data autonomously into said communications controllers, in which calculations take place.

19. Communications system according to claim 13, characterized in that one or more communications controllers operate as operating mechanisms, one or more processors autonomously feeding data into said communications controllers and the latter transfer data to one or more processors.

20. Hyperprocessor built up from a communications system according to one of the claims 13 to 19, characterized in that the hyperprocessor is provided with further communications controllers, which allow communication with other hyperprocessors.

21. Hyperprocessor according to claim 20, Characterized in that several hyperprocessors are coupled together.

22. Hyperprocessor according to claim 21, characterized in that several hyperprocessors are hierarchically coupled together.

## Revendications

1. Système multiprocesseurs pour le traitement électronique de données, fonctionnant en parallèle, dans lequel les processeurs disposent de mémoires de données, de mémoires d'instructions et d'interfaces individuelles vers un système de communication commun, caractérisé en ce que le système de communication commun est programmé comme un tout formant un ensemble hiérarchiquement supérieur avec des consignes d'exécution et fonctionne en mode d'actionnement autonome suivant les consignes d'exécution,
dans lequel des algorithmes individuels, des ensembles de données et des instructions de protocole sont envoyés dans la mémoire des processeurs adressés sur la base des consignes d'exécution programmées du système de communication avant une session de communication,
dans lequel les instructions de protocole déterminent des tâches et des fonctions, ainsi que des critères de communication concernant les conditions temporelles des échanges de données des différents processeurs avec le système de communication, et les différents processeurs traitent des ensembles de données à partir de leurs algorithmes individuels pendant une session de communication et délivrent des résultats individuels de manière autonome à tous les processeurs sous la forme de données, conformément aux instructions de protocole.

2. Système selon la revendication 1, caractérisé en ce que l'autonomie réside dans le fait que les différents processeurs émettent et reçoivent des données de manière indépendante selon les instructions de protocole.

3. Système selon l'une des revendications 1 ou 2, caractérisé en ce que l'autonomie réside dans le fait que les différents processeurs actualisent de manière indépendante leurs ensembles de données individuels selon les instructions de protocole en fonction des données communiquées et poursuivent ensuite le traitement de leurs algorithmes individuels avec ces ensembles de données individuels actualisés de manière indépendante.

4. Système selon la revendication 3, caractérisé en ce que les différents processeurs gèrent de manière autonome leurs ensembles de données individuels par comptage des données communiquées.

5. Système selon l'une des revendications 1 à 4, caractérisé en ce que l'autonomie réside dans le fait qu'un plan de circulation comportant des tailles de paquets de communication entre les différents processeurs est déterminé en fonction des instructions de protocole avant la communication.

6. Système selon la revendication 5, caractérisé en ce que les paquets de communication utilisés entre les différents processeurs sont de même taille.

7. Système selon la revendication 5, caractérisé en ce que les paquets de communication utilisés entre les différents processeurs sont de taille différente.

8. Système selon l'une ou l'ensemble des revendications 1 à 5, caractérisé en ce que l'autonomie réside dans le fait que des largeurs de bande passante sont déterminés avant la communication pour la transmission entre les différents processeurs selon les instructions de protocole.

9. Système selon la revendication 8, caractérisé en ce qu'un multiplexage est réalisé, de façon à accéder à des données de plusieurs processeurs sur plusieurs largeurs de bande passante.

10. Système selon la revendication 9, caractérisé en ce que les largeurs de bande de transmission sont subdivisées en plusieurs canaux de transmission plus étroits et indépendants en fonction de la taille des données à communiquer.

11. Système selon l'une ou l'ensemble des revendications 1 à 10, caractérisé en ce que les différents processeurs ne communiquent entre eux que par l'émission et la réception de données passant par des interfaces vers le système de communication.

12. Procédé selon la revendication 11, caractérisé en ce que des données modifiées provenant d'ensembles de données individuels peuvent être communiquées en tant que données.

13. Système de communication permettant l'utilisation d'un système multiprocesseurs selon les revendications 1 à 12, caractérisé en ce que les différents processeurs disposent de contrôleurs de communication qui commandent l'ouverture et la fermeture des mémoires de données par le biais d'interfaces avec le système de communication.

14. Système de communication selon la revendication 13, caractérisé en ce que les contrôleurs de communication fonctionnent indépendamment des différents processeurs et en ce que les différents processeurs fonctionnent indépendamment de l'ouverture et de la fermeture des mémoires de données et de la communication via les interfaces.

15. Système de communication selon la revendication 13, caractérisé en ce que plusieurs contrôleurs de communication peuvent être réunis dans un module.

16. Système de communication selon la revendication 13, caractérisé en ce que les processeurs sont disposés avec leurs contrôleurs de communication en anneau fermé.

17. Système de communication selon la revendication 16, caractérisé en ce que les contrôleurs de communication sont reliés entre eux par un bus.

18. Système de communication selon la revendication 13, caractérisé en ce qu'un ou plusieurs contrôleurs de communication fonctionnent comme une ou plusieurs unités de calcul utilisables ensemble, un ou plusieurs processeurs fournissant des données à ces contrôleurs de communication de manière autonome et des calculs étant exécutés dans ces contrôleurs de communication.

19. Système de communication selon la revendication 13, caractérisé en ce qu'un ou plusieurs contrôleurs de communication fonctionnent comme une unité d'exploitation, un ou plusieurs processeurs fournissant des données à ces contrôleurs de communication de manière autonome et ces contrôleurs de communication transmettant des données à un ou plusieurs processeurs.

20. Hyperprocesseur construit à partir d'un système de communication selon l'une quelconque des revendications 13 à 19, caractérisé en ce qu'il est doté d'autres contrôleurs de communication qui permettent la communication avec d'autres hyperprocesseurs.

21. Hyperprocesseur selon la revendication 20, caractérisé en ce que plusieurs hyperprocesseurs sont couplés les uns aux autres.

22. Hyperprocesseur selon la revendication 21, caractérisé en ce que plusieurs hyperprocesseurs sont couplés les uns aux autres de manière hiérarchisée.
